# EUROPÄISCHE PATENTSCHRIFT

(11) **EP 1 683 262 B1**
(45) Veröffentlichungstag und Bekanntmachung des Hinweises auf die Patenterteilung: **03.09.2008**
(21) Anmeldenummer: 04796946.4
(22) Anmeldetag: 12.11.2004
(51) Int. Cl.: H02P 6/24, H02P 3/22

(54) **VERFAHREN ZUM BREMSEN EINER SYNCHRONMASCHINE**
BRAKING METHOD FOR A SYNCHRONOUS MACHINE
PROCEDE POUR FREINER UNE MACHINE SYNCHRONE

(30) Priorität: 14.11.2003 AT 18342003
(43) Veröffentlichungstag der Anmeldung: 26.07.2006
(73) Patentinhaber: Bernecker+Rainer Industrie-Elektronik Gesellschaft MbH, 5142 Eggelsberg 120 (AT)
(72) Erfinder: RAINER, Josef, A-5133 Franking (AT); BERNECKER, Erwin, A-5122 Hochburg (AT)
(74) Vertreter: Hübscher, Helmut
(86) Internationale Anmeldenummer: PCT/AT2004/000401
(87) Internationale Veröffentlichungsnummer: WO 2005/048446

(56) Entgegenhaltungen:
- EP-A- 0 648 008
- EP-A- 1 162 726
- DE-A1- 10 206 828
- PATENT ABSTRACTS OF JAPAN Bd. 1997, Nr. 06, 30. Juni 1997 (1997-06-30) & JP 09 047055 A (FUJI ELECTRIC CO LTD; NISSAN MOTOR CO LTD), 14. Februar 1997 (1997-02-14)
- PATENT ABSTRACTS OF JAPAN Bd. 017, Nr. 035 (E-1310), 22. Januar 1993 (1993-01-22) & JP 04 255497 A (TOSHIBA CORP), 10. September 1992 (1992-09-10)

## Beschreibung

Die Erfindung bezieht sich auf eine Synchronmaschine mit einem Rotor und mit einer kurzschließbaren Ankerwicklung, die an einen Stromrichter angeschlossenen ist, der je eine über Leistungsschalter schaltbare Halbbrücke für positive und negative Halbwellen des Stromes aufweist.

Bei Überbelastungen, Netzspannungsausfall, Zwischenkreisüberspannung, Verlust der Positions- bzw. Geschwindigkeitsinformation kann es für Synchronmaschinen notwendig sein, einen sofortigen Notstop einzuleiten. Dieser Notstop kann entweder durch Energietrennung der Ankerwicklungen vom Netz oder durch eine aktive Bremsung erfolgen. Eine besonders einfach Möglichkeit einer aktiven Bremsung für Synchronmotoren ist die Kurzschlußbremsung, bei der die Klemmen der Ankerwicklungen über einen Leistungsschalter, gegebenenfalls unter Zwischenschaltung von Bremswiderständen, kurzgeschlossen werden. Der erzielbare Bremsmomentverlauf über der Drehzahl entspricht in diesem Fall ungefähr dem des Drehmomentenverlaufes einer Asynchronmaschine. Soll eine Bremsung einer Synchronmaschine eingeleitet werden, muß zuvor der Wechselrichter deaktiviert werden, um eine Zwischenkreiskurzschluß zu vermeiden, wonach der Leistungsschalter die Ankerwicklungen, gegebenenfalls unter Zwischenschaltung von Bremswiderständen, kurzschließt. Werden im Kurzschlußkreis keine zusätzlichen Bremswiderstände vorgesehen, variiert das Bremsmoment während des Abbremsvorganges besonders stark über der Drehzahl. So steigt das zu Beginn der Bremsung verhältnismäßig geringe Bremsmoment erst verhältnismäßig spät zu seinem Maximalwert an, um gleich danach steil gegen Null abzufallen. Der Nachteil liegt somit in dem verhältnismäßig kleinen Anfangbremsmoment und im nicht über den gesamten Drehzahlbereich konstanten Bremsmoment. Soll der Anfangswert des Bremsmomentes angehoben werden, ist im Kurzschlußkreis ein zusätzlicher Bremswiderstand vorzusehen, wodurch das Bremsmoment ähnlich der Momentkennlinie des Asynchronmotors verschoben und die Gleichförmigkeit des Bremsmomentes verbessert werden kann. Ein wesentlicher Nachteil bei der Verwendung von Bremswiderständen liegt darin, daß zusätzliche Komponenten vorgesehen werden müssen, die zudem einer starken thermischen Belastung unterliegen, was es in Abhängigkeit der Dimensionierung der Bremswiderstände nicht immer ermöglicht, sofort nach einer durchgeführten Kurzschlußbremsung eine erneute Kurzschlußbremsung einzuleiten. Zwischen zwei Kurzschlußbremsungen muß somit eine vorbestimmte Zeit abgewartet werden, bis sich die Bremswiderstände wieder abgekühlt haben. Ein weiterer wesentlicher Nachteil der Kurzschlußbremsung liegt darin, daß der Kurzschlußstrom hohe Spitzenwerte erreichen kann, was gegebenenfalls eine dauerhafte Schädigung des Motors, insbesondere eine Entmagnetisierung von Permanentmagneten einer permanenterregten Synchronmaschine, zur Folge hat, wenn ein maximal zulässiger Strom überschritten wird.

Eine elektrische Maschine mit einem Rotor und einem über einen Bremswiderstand kurzschließbaren Ankerwicklung ist aus der EP 1 162 726 A1 bekannt, wobei die Ankerwicklungen an eine über einen Leistungsschalter kurzschließbare Gleichrichterschaltung ausgeschlossen sind. Dabei handelt es sich um eine herkömmliche Widerstandsbremse mit den vorgenannten Nachteilen. Um die Zwischenkreisspannung im Bremsfall einer Windkraftanlage stabil halten zu können, wurde bereits vorgeschlagen Bremswiderstände vorzusehen, die pulsweitenmoduliert zuschaltbar sind (DE 102 06 828 A1).

Der Erfindung liegt somit die Aufgabe zugrunde eine Synchronmaschine der eingangs geschilderten Art anzugeben, mit der der Kurzschlußstrom sicher begrenzt und das zu erzielende Bremsmoment möglichst über das gesamte Drehzahlband auf einem nahezu konstanten Wert geregelt werden können soll und die dabei über eine möglichst einfache Bremseinrichtung verfügt.

Die Erfindung löst diese Aufgabe dadurch, daß die die Ankerwicklungen kurzschließenden Leistungsschalter zweier Halbbrücken des Stromrichters abwechselnd über eine Regeleinrichtung in Abhängigkeit von der Differenz zwischen dem dem Sollwert des Bremsmomentes entsprechenden Sollwert und dem Istwert des Kurzschlußstromes ansteuerbar sind.

Erfindungsgemäß wird der Kurzschlußstrom in den Ankerwicklungen pulsweitenmoduliert geregelt, was beispielsweise dadurch erreicht wird, daß Leistungsschalter die Ankerwicklungen in Abhängigkeit der jeweils von der Regelung vorgegebenen Kurzschlußdauer kurzschließen. Mit Hilfe der Pulsweitenmodulation kann der Kurzschlußstrom derart vorgegeben werden, daß sich das gewünschte Bremsmoment auf besonders einfache Weise einstellt. Damit ist es nicht nur möglich das Bremsmoment über den gesamten Drehzahlbereich nahezu konstant zu halten, sondern ergibt sich auch die Möglichkeit auf besonders einfache Weise mit jedem kleineren, als dem maximalen Drehmoment abzubremsen, da es bei manchen Anwendungen durch eine zu starke Abbremsungen zu Schäden in der über die Motorwelle der Synchronmaschine angekoppelten Mechanik kommen kann. Ein übermäßig starkes Ansteigen des Kurzschlußstromes kann mit der erfindungsgemäßen Regelung ebenfalls elegant behoben werden, wodurch ein Überschreiten des zulässigen Kurzschlußstromes und somit beispielsweise ein entmagnetisieren von Permanentmagneten sicher verhindert werden kann. Ein weiterer Vorteil der erfindungsgemäßen Regelung liegt darin, daß nach einer erfolgten Kurzschlußbremsung unmittelbar wieder eine Kurzschlußbremsung eingeleitet werden kann und keine Auskühlzeit abgewartet werden muß, wie dies bei einer Widerstandsbremsung gemäß dem Stand der Technik der Fall ist.

Bei der erfindungsgemäßen Synchronmaschine wird der Kurzschluß in den Ankerwicklungen über den Wechselrichter erzeugt, so daß keine zusätzlichen Leistungshalbleiterbauteile notwendig sind. Zum Abbremsen der Synchronmaschine werden die Schaltzeiten für die Leistungsschalter nicht mehr von einer den Betrieb der Synchronmaschine steuernden Vektorregelung, sondern von einem Momentenregler bestimmt, der die Ankerwicklungen in Abhängigkeit des zu erzielenden Kurzschlußstromes ansteuert.

Dadurch, daß die die Ankerwicklungen kurzschließenden Leistungsschalter zweier Halbbrücken des Stromrichters abwechselnd über eine Regeleinrichtung in Abhängigkeit von der Differenz zwischen dem dem Sollwert des Bremsmomentes entsprechenden Sollwert des Kurzschlußstromes und dem Istwert des Kurzschlußstromes ansteuerbar sind, können sowohl die Halbbrücke für positive Halbwellen als auch die Halbbrücke für negative Halbwellen des Stromrichters als Kurzschlußelemente verwendet werden wodurch eine bessere thermische Auslastung der Leistungsschalter gewährleistet ist. Die Bremsleistung wird somit in besonders einfacher Weise über den im allgemeinen thermisch hochbelastbaren Stromrichter, die Ankerwicklung und einen gegebenenfalls vorgesehenen Bremswiderstand abgeführt, wodurch der Bauaufwand minimiert wird und nur geringe zusätzliche Maßnahmen für den Bremsbetrieb einer erfindungsgemäßen Synchronmaschine vorgesehen werden müssen.

In der Zeichnung ist die Erfindung anhend eines Ausführungsbeispiels schematisch dargestellt. Es zeigen:
- Fig. 1: je eine Ausgestaltungsvariante einer erfindungsgemäßen Synchronmaschine,
- Fig. 2 und 3: zwei Regelkonzept für die Kurzschlußbremsung
- Fig. 4 und 6: Diagramme bezgl. des Drehmomenten bzw. Drehzahlverlaufes einer Kurzschlußbremsung gemäß des Standes der Technik und
- Fig. 5 und 7: Diagramme bezgl. Drehmomenten und Drehzahlverlaufes einer erfindungsgemäßen Kurzschlußbremsung.

Eine permanenterregte Synchronmaschine 1 umfaßt Ankerwicklungen u, v, w, die über eine Bremseinrichtung 2 zwei kurzschließbar sind. Für den normalen Betrieb der Synchronmaschine 1 ist ein Stromrichter 3 vorgesehen der über eine Ansteuereinheit 4 in üblicher Weise angesteuert wird.

Die Ansteuereinheit 4 umfaßt unter anderem einen Drehwinkel und Drehgeschwindigkeitsgeber 5, einen Positionsregler 6, einen Geschwindigkeitsregler 7, einen Stromregler 8 sowie Wandler für mathematische Transformationen 9, eine Raumzeigermodulation 10 und einen zwei aus drei Wandler 20.

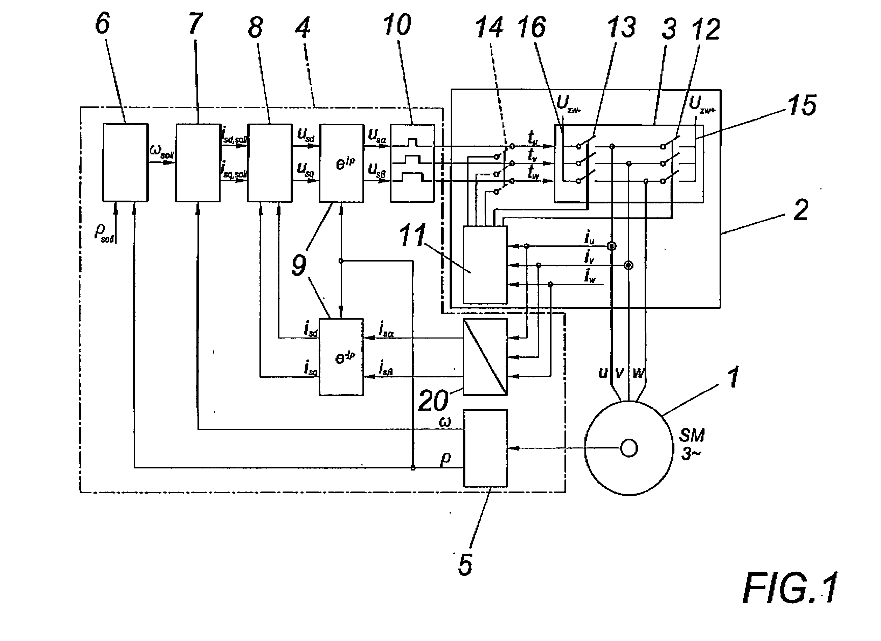

Gemäß dem Ausführungsbeispiel nach Fig. 1 gehört der Bremseinrichtung 2 ein Drehmomentregler 11 zu, der die Leistungsschaltelemente 12 und 13 in Fall einer Bremsung vorzugsweise abwechselnd kurzschließt. Zuvor muß allerdings eine Ansteuerung der Leistungsschalter 12 und 13 durch die Ansteuereinheit 4 unterbunden werden, wozu die Schalter 14 in diesem Fall geöffnet werden. Zum Abbremsen der Synchronmaschine 1 werden die die Ankerwicklungen u, v, w kurzschließenden Leistungsschalter 12, 13 zumindest einer Halbbrücke 15, 16 des Stromrichters 3 abwechselnd über den Regler 11 in Abhängigkeit von der Differenz zwischen dem dem Sollwert des Bremsmomentes entsprechenden Sollwert des Kurzschlußstromes und dem Istwert des Kurzschlußstromes angesteuert.

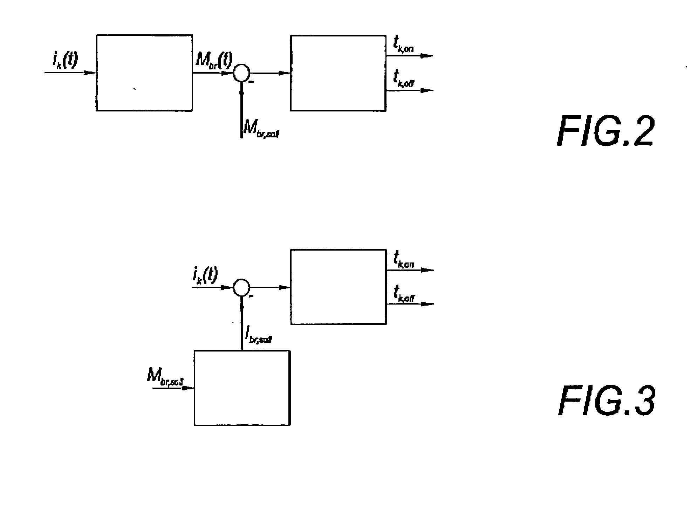

Den Fig. 2 und 3 sind Regelkonzepte für die Kurzschlußbremsung zu entnehmen, wobei der Kurzschlußstrom iₖ der Ankerwicklungen u, v, w und das Sollbremsmoment M_{br, soll} stets als Eingangsgröße für die Regelung dient und die Regeleinrichtung am Ausgang Schaltzeiten T_{k,on} (Schalter ein) und T_{k,off} (Schalter aus) für die Leistungschalter 12, 13, 17 liefert.

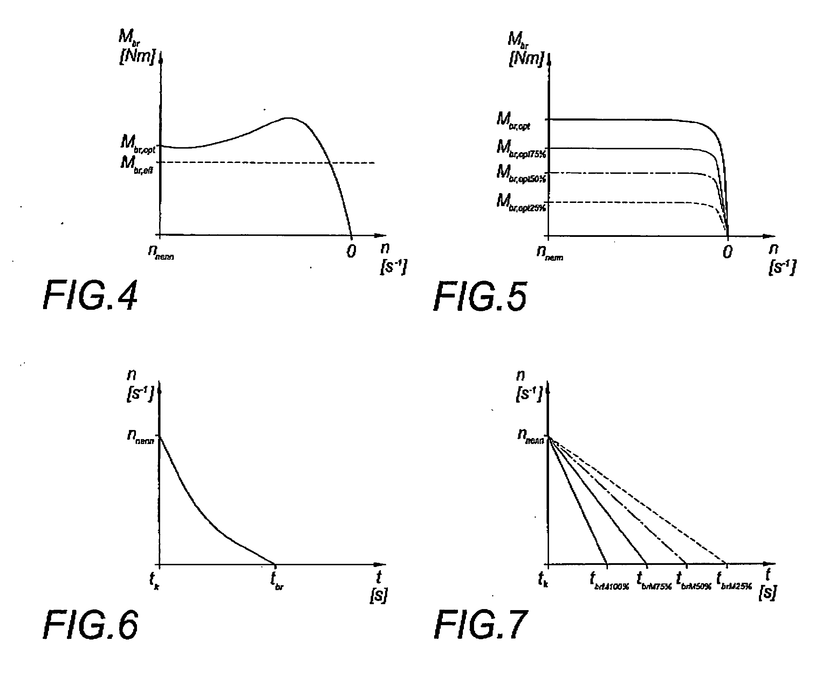

Fig. 4 und 5 zeigen einen Bremsmomentenverlauf über der Drehzahl bei einer Kurzschlußbremsung mit Bremswiderstand gemäß dem Stand der Technik (Fig. 4) und mit einer erfindungsgemäßen Bremsvorrichtung (Fig. 5). Die Fig. 6 und 7 zeigen die den Fig. 4 und 5 zugehörigen Drehzahlverläufe über der Zeit.

## Patentansprüche

1. Synchronmaschine mit einem Rotor und mit einer kurzschließbaren Ankerwicklung, die an einen Stromrichter angeschlossenen ist, der je eine über Leistungsschalter schaltbare Halbbrücke für positive und negative Halbwellen des Stromes aufweist, **dadurch gekennzeichnet, daß** die die Ankerwicklungen (u, v, w) kurzschließenden Leistungsschalter (12, 13) zweier Halbbrücken (15, 16) des Stromrichters (3) abwechselnd über eine Regeleinrichtung (11) in Abhängigkeit von der Differenz zwischen dem Sollwert des Bremsmomentes entsprechenden Sollwert und dem Istwert des Kurzschlußstromes ansteuerbar sind.

## Claims

1. Synchronous machine having a rotor and having an armature winding which can be short-circuited and which is attached to a static power converter which comprises a respective half bridge, which can be switched by power switches, for positive and negative half waves of the current, **characterised in that** the power switches (12, 13), short-circuiting the armature windings (u, v, w), of two half bridges (15, 16) of the static power converter (3) can be controlled in alternation by means of a control device (11) in dependence upon the difference between the setpoint value corresponding [to the] setpoint value of the braking moment and the real value of the short-circuit current.

## Revendications

1. Machine synchrone, avec un rotor et avec un enroulement d'induit, susceptible d'être mis en court-circuit, raccordée à un redresseur présentant un demi-pont, pouvant être commuté par des interrupteurs de puissance, respectivement pour des demi-ondes positives et négatives du courant électrique, **caractérisée en ce que** les interrupteurs de puissance (12, 13), mettant en court-circuit les enrouliements d'induit (u, v, w), de deux demi-pont (15 ; 16) du redresseur (3) sont susceptibles d'être commandés alternativement, par l'intermédiaire d'un dispositif de régulation (11), en fonction de la différence entre la valeur de consigne correspondant à la valeur de consigne du couple de freinage et la valeur réelle du courant de court-circuit.
